# EUROPÄISCHE PATENTANMELDUNG

(11) **EP 1 077 170 A2**
(43) Veröffentlichungstag der Anmeldung: **21.02.2001**
(21) Anmeldenummer: 00112855.2
(22) Anmeldetag: 17.06.2000
(51) Int. Cl.: B62B 7/10

(54) **Zusammenklappbarer Hand- oder Multifunktionswagen, insbesondere Kinderwagen**

(30) Priorität: 31.07.1999 DE 19936182
(71) Anmelder: Schaknat, Carsten, 92358 Ittelhofen (DE)
(72) Erfinder: Schaknat, Carsten, 92358 Ittelhofen (DE)
(74) Vertreter: Graf, Helmut, Dipl.-Ing.

(57) **Zusammenfassung**

Die Erfindung bezieht sich auf einen neuartigen zusammenklappbaren Hand- oder Multifunktionswagen, insbesondere Kinderwagen, mit einem Rahmen (1), der mehrere über Gelenke (5,8) miteinander verbundene Rahmenteile (2,3,4) aufweist, von denen ein erstes Rahmenteil (2) die Deichsel des Wagens mit dem Handgriff (2'') bildet, sowie mit mehreren eine vordere und eine rückwärtige Achse bildenden Rädern (9,10).

## Beschreibung

Die Erfindung bezieht sich auf einen zusammenklappbaren Zusammenklappbarer Hand- oder Multifunktionswagen gemäß Oberbegriff Patentanspruch 1, 2 oder 3.

Insbesondere zusammenklappbare Kinderwagen sind in unterschiedlichsten Ausführungen bekannt.

Aufgabe der Erfindung ist es, einen zusammenklappbaren Hand- oder Multifunktionswagen aufzuzeigen, der sich gegenüber bekannten Wägen durch eine vereinfachte Handhabung und/oder durch ein geringes Volumen insbesondere im Nichtgebrauchszustand auszeichnet.

Zur Lösung dieser Aufgabe ist ein Handwagen entsprechend dem Patentanspruch 1, 2 oder 3 ausgebildet.

Der erfindungsgemäße Multifunktionswagen zeichnet sich durch eine einfache, ansprechende Konstruktion sowie durch eine einfache Handhabung aus. Bei einer bevorzugten Ausführungsform ist der Rahmen so ausgebildet, daß keine direkte Verbindung zwischen dem den Handgriff bildenden ersten Rahmenteil und er Vorderachse an dem zweiten Rahmenteil besteht. Hierdurch ist der Rahmen im aufgeklappten Zustand, d.h. im Gebrauchszustand an der Vorderseite frei zugänglich, wodurch die Verwendbarkeit des Multifunktionswagens wesentlich verbessert wird.

Weiterbildungen der Erfindung sind Gegenstand der Unteransprüche.

Die Erfindung wird im folgenden anhand der Figuren an Ausführungsbeispielen näher erläutert. Es zeigen:
Fig. 1 in vereinfachter Darstellung und in Seitenansicht den Rahmen eines Handwagens, insbesondere Kinderwagens gemäß der Erfindung im aufgeklappten, d.h. Gebrauchszustand;
Fig. 2 den Rahmen der Figur 1 im zusammengeklappten Zustand;
Fig. 3 in vereinfachter Darstellung eine Rückansicht des Rahmens der Figur 1;
Fig. 4 in vergrößerter Darstellung eine Draufsicht auf die Innenseite des ersten Gelenkes mit dem dort vorgesehenen Kupplungszapfen;
Fig. 5 in vereinfachter Darstellung und in Draufsicht ein Verbindungsstück zur Verbindung mit dem Kupplungszapfen der Figur 4.

In den Figuren ist mit 1 der Rahmen eines zusammenklappbaren Hand- oder Multifunktionswagens, insbesondere eines Kinder- oder Sportwagens bezeichnet.

Dieser Rahmen 1 ist im wesentlichen von drei Rahmenteilen 2, 3 und 4 gebildet, die weitestgehend aus Rohrprofilen aus Metall, beispielsweise aus Stahl, Aluminium oder einer Aluminiumlegierung hergestellt sind und bei der dargestellten Ausführungsform jeweils wenigstens zwei parallele Schenkel bilden, die über Querstreben zu dem jeweiligen Rahmenteil 2 - 4 miteinander verbunden sind. Bei der dargestellten Ausführungsform ist das Rahmenteil 2, welches die 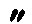 Deichsel" zum Schieben des Rahmens 1 bzw. des Handwagens ist, von den beiden Schenkeln 2' gebildet, die an einem Ende über den Quersteg 2'' miteinander verbunden sind. Letzterer bildet den Handgriff des Rahmens bzw. Handwagens.

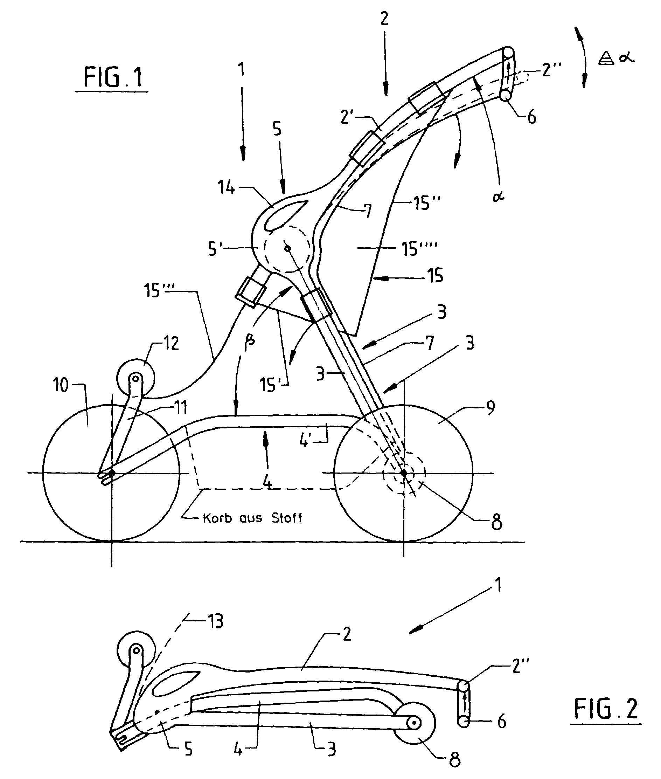

Das Rahmenteil 3 ist bei der dargestellten Ausführungsform von den beiden parallelen und im Abstand voneinander angeordneten Schenkeln 3' gebildet, die bei der Darstellung der Figur 1 jeweils mit ihrem oberen, freien Enden über ein erstes Gelenk 5 mit dem dem Quersteg 2'' entfernt liegenden Ende eines Schenkels 2' verbunden sind. Die Gelenkachsen der Gelenke 5 sind achsgleich angeordnet, und zwar jeweils senkrecht zu den Schenkeln 2' bzw. 3' und parallel zu der Längserstreckung des Quersteges 2'. Mit Hilfe der Gelenke 5 kann das Rahmenteil 2 relativ zu dem Rahmenteil 3 geschwenkt werden, wobei die Gelenke 5 vorgegebene Raststellungen aufweisen, die vorgegebene Lagen der Rahmenteile 2 und 3 relativ zueinander definieren, in denen die Gelenke blockiert sind. Das Einrasten der Gelenke 5 an den vorgegebenen Raststellungen erfolgt durch an diesen Gelenken vorgesehene federnde Rastmittel, die durch Betätigen eines am Quersteg 2'' vorgesehenen Entriegelungshebels 6 über Seilzüge 7 gelöst werden können.

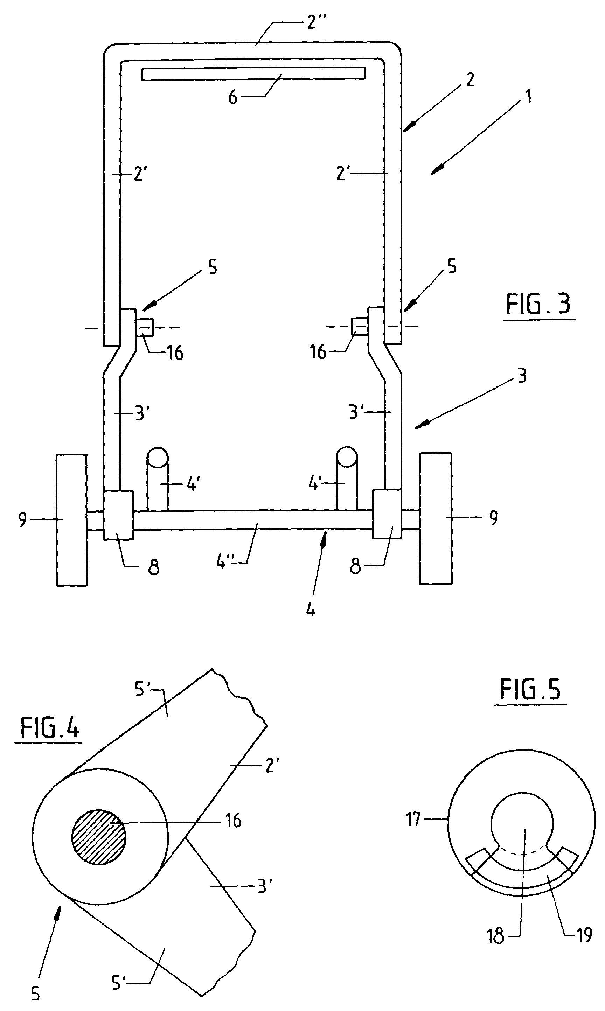

Die unteren, d.h. den Gelenken 5 jeweils entfernt liegende Enden der Schenkel 3' sind über jeweils ein zweites Gelenk 8 gelenkig mit dem Rahmenteil 4 verbunden. Die beiden Gelenke 8 sind mit Ihren Gelenkachsen wiederum achsgleich angeordnet. Die Gelenkachsen der Gelenke 8 liegen parallel zu der gemeinsamen Gelenkachse der Gelenke 5 und auch parallel zur Längserstreckung des Quersteges 2''. Weiterhin sind die Gelenke 8 auf einem Querstege 4'' des Rahmenteils 4 angeordnet, der (Quersteg) mit seiner Achse achsgleich mit der Achse der Gelenke 8 liegt und beidendig über diese Gelenke 8 vorsteht (Figur 3). An diesen vorstehenden Enden des Quersteges 4'' ist jeweils eines der hinteren Räder 9 frei drehbar gelagert, und zwar um die Achse des Quersteges 4''. Über die Gelenke 8 sind die Rahmenteile 3 und 4 relativ zueinander schwenkbar, wobei beide Gelenke 8 bei der dargestellten Ausführungsform wenigstens zwei vorgegebene Raststellungen aufweisen, in denen diese Gelenke verriegelt sind. Über den jeweiligen Seilzug 7 kann auch jedes Gelenk 8 von dem Handgriff des Handwagens, d.h. von dem Quersteg 2'' entriegelt werden.

Wie dargestellt, sind zwei Seilzüge 7 vorgesehen, von denen sich jeder entlang eines Schenkels 2' an eines der Gelenke 5 und von diesem weiter entlang des anschließenden Schenkels 3' an eines der Gelenke 8 erstreckt. Die Gelenke 8 sind wiederum vorzugsweise so ausgeführt, daß sich die Raststellungen durch federndes Einrasten von entsprechenden Rastelementen ergeben.

An dem Quersteg 4'' sind innerhalb der Gelenke 8 zwei Schenkel 4'' mit einem Ende befestigt, die an ihrem anderen Ende radgabelartig ausgeführt sind. An diesem Ende der Schenkel 4' ist das vordere Rad 10 um eine Achse freidrehbar gelagert, die parallel zur Achse der hinteren Räder 9 und damit parallel zu den Achsen der Gelenke 5 und 8 sowie quer zur Längserstreckung der beiden Schenkel 4' liegt.

Im Bereich des vorderen Rades 10 ist am Rahmenteil 4 oberhalb dieses Rades mittels eines Haltebügels 11 eine Fußauflage 12 befestigt, die sich in Richtung senkrecht zur Zeichenebene der Figur 1, d.h. in Richtung der Achse der Räder 9 und 10 und der Gelenke 5 und 8 erstreckt und beidendig etwas über das Rad 10 wegsteht.

Wie die Figur 1 zeigt ist die Ausbildung weiterhin so getroffen, daß über die Gelenke 5 und 8 die Rahmenteile 2 - 4 in der Gebrauchsstellung des Handwagens mit ihren Rahmenebenen jeweils senkrecht zur Zeichenebene der Figur 1 und damit parallel zu den Achsen der Gelenke 5 und 8 sowie der Räder 9 und 10 angeordnet sind, und zwar Zick-Zack-förmig oder Z-förmig derart, daß die Ebenen der Rahmenteile 2 und 3 einen Winkel α miteinander einschließen, der sich zur Rückseite, d.h. zu dem von dem Quersteg 2'' gebildeten Griff des Handwagens hin öffnet, und die Ebenen der Rahmenteile 3 und 4 einen Winkel β miteinander einschließt, der sich zu der Vorderseite des Handwagens hin, d.h. zu dem vorderen Rad 3 hin öffnet. Der Winkel α ist dabei ein Winkel größer als 90°, während der Winkel β kleiner als 90° ist.

Im Nichtgebrauchszustand kann entsprechend der Figur 2 der Rahmen 1 durch Schwenken um die Gelenke 5 und 8 so zusammengefaltet oder zusammengeklappt werden, und zwar jeweils unter Verkleinerung der Winkel α und β, daß die Rahmenteile 2, 3 und 5 im wesentlichen unmittelbar nebeneinander liegen und das Rahmenteil 4 zwischen den beiden Schenkeln 3' des Rahmenteils 3 und den Gelenken 5 aufgenommen ist. Die Länge der Schenkel 3' ist auch unter Berücksichtigung der Abmessungen der Gelenke 5 so gewählt, daß beim Zusammenklappen des Rahmens 1, d.h. beim Überführen dieses Rahmens in die Nichtgebrauchsstellung die Gelenke 5 beim Schwenken des Rahmenteiles 3 um die Gelenke 8 an der Fußauflage 12 vorbeigeschwenkt werden können, wie dies in der Figur 2 mit der unterbrochenen Linie 13 angedeutet ist.

Die Raststellungen der Gelenke 8 sind so gewählt, daß in einer, das Schwenken um diese Gelenke blockierenden Raststellung, die der Gebrauchsstellung des Rahmens 1 entspricht, die beiden Rahmenteile 3 und 4 den Winkel β miteinander einschließen, und in der anderen Raststellung, die dem Nichtgebrauchszustand des Rahmens 1 entspricht, die beiden Rahmenteile 3 und 4 in etwa parallel zueinander liegen.

Die Gelenke 5 besitzen mehrere erste Raststellungen, die relativ dicht aufeinander folgend vorgesehen sind und u.a. einer Höheneinstellung des Rahmenteils 2 und des Quersteges 2'' dienen, und zwar für diese Einstellung in dem in der Figur 1 mit Δα bezeichneten Einstellbereich. Dieser macht nur einen Bruchteil des Winkels α ausmacht. Zusätzlich zu diesen ersten Raststellungen besitzen die Gelenke 5 eine zweite Raststellung, die dem Nichtgebrauchszustand entspricht und in der das Rahmenteil 2 im wesentlichen parallel zu den Rahmenteilen 3 und 4 angeordnet ist.

Im Nichtgebrauchszustand sind nicht nur das Rahmenteil 3, sondern auch das Rahmenteil 2 zwischen den beiden hinteren Rädern 9 aufgenommen, während sich das einzige vordere Rad 10 zwischen den beiden Schenkeln 4'' des Rahmenteils 4 befindet und diese von den Schenkeln 2' des Rahmenteils 2, den Schenkeln 3' des Rahmenteils 3 und den beiden Gelenken 5 umgriffen sind.

Wie die Figur 2 weiterhin zeigt, besitzen die Schenkel 2' des Rahmenteils 2 eine solche Länge, daß im zusammengeklappten Zustand des Rahmens 1 sich der Quersteg 2'' mit dem dortigen Entriegelungshebel 6 zwar zwischen den hinteren Rädern 9 befindet, aber mit diesem Quersteg 2'' und dem Entriegelungsgriff 6 über die den Gelenken 5 abgewandte Seite der Gelenke 8 wegsteht.

Durch die beschriebene Ausbildung ist es möglich, den Rahmen 1 und damit den Handwagen bzw. Kinderwagen im Nichtgebrauchszustand sehr klein und kompakt zusammenzuklappen.

Wie in den Figuren auch dargestellt ist, sind die Gehäuse der Gelenke 5, die (Gehäuse) beispielsweise aus Kunststoff gefertigt sind, so ausgeführt, daß jedes Gelenk bzw. dessen Gehäuse 5' einen Handgriff 14 bildet, an dem der Rahmen 1 bzw. Handwagen getragen, angehoben usw. werden kann.

Mit 15 ist in der Figur 1 allgemein ein in dem Rahmen 1 angeordneter Sitz bezeichnet, der im wesentlichen unter Verwendung von textilem Material hergestellt und an dem Rahmen 1 befestigt ist, und zwar zwischen den Schenkeln 2' und 3'. Der Sitz 15 bildet u.a. eine Sitzfläche 15', eine Rückenlehne 15'', eine Bein- oder Fußauflage 15''' sowie im Bereich der Sitzfläche 15 und der Rückenlehne 15'' seitlich zwei Wagen 15''''. Durch Anknöpfen oder Annähen ist der Sitz 15 am Rahmen 1 gehalten. Grundsätzlich besteht auch die Möglichkeit, diesen Sitz 15 austauschbar auszubilden, so daß anstelle des Sitzes auch ein anderes Funktionselement, Funktionselement, beispielsweise Kinderwagentasche, Kindertragtasche, Fahrradsitz, Babywippe, eines Hochstuhl, usw. an dem Rahmen 1 befestigt werden kann und/oder bei ein und demselben Rahmen 1 Sitze unterschiedlicher Farbgebung und/oder Ausgestaltung vorgesehen werden können.

Für diese austauschbare Anordnung des jeweiligen Funktionselementes im Rahmen 1 sind bei der dargestellten Ausführungsform an den Gelenken 5 innen, d.h. an den einander zugewandten Seiten dieser Gelenke 5 Kupplungszapfen 16 vorgesehen, die mit Verbindungsstücken 17 zusammenwirken, welche außen liegend und seitlich an den Wangen 15'''' des jeweiligen Sitzes 15 oder an einem anderen Funktionselement vorgesehen sind.

Jedes Verbindungsstück 17 besitzt bei der dargestellten Ausführungsform eine Öffnung 18, in die der zugehörige Kupplungszapfen 16 seitlich einführbar ist und die nach dem Einführen durch ein durch Federmittel vorgespanntes Verriegelungselement 19 so verschlossen ist, daß der Kupplungszapfen 16 in der jeweiligen Öffnung 18 gegen seitliches Herausführen verriegelt ist. Die von dem jeweiligen Kupplungszapfen 16 und dem Verbindungsstück 17 gebildete Schnellverriegelung hat u.a. auch den Vorteil, daß das jeweilige Funktionselement um die Achsen der achsgleich angeordneten Kupplungszapfen 16 schwenkbar im Rahmen 1 gehalten ist, hierdurch also eine Anpassung z.B. auch an die Stellung des Rahmenteils 2 möglich ist.

Mit der Verstellung des Rahmenteils 2 in dem Verstellbereich Δα ist insbesondere auch eine Verstellung der Neigung des Rückenteils 15'' möglich.

### Bezugszeichenliste

- 1: Rahmen
- 2, 3, 4: Rahmenteil
- 2', 3', 4': Schenkel
- 2'', 4'': Quersteg
- 5: Gelenk
- 5': Gelenkgehäuse
- 6: Entriegelungshebel
- 7: Seilzug
- 8: Gelenk
- 9, 10: Rad
- 11: Halterung
- 12: Fußauflage
- 13: Linie
- 14: Traggriff
- 15: Sitz
- 15': Sitzfläche
- 15'': Rückenlehne
- 15''': Fuß oder Beinauflage
- 15'''': Seitenwange
- 16: Kupplungszapfen
- 17: Kupplungsstück
- 18: Öffnung
- 19: Verriegelungselement

## Patentansprüche

1. Zusammenklappbarer Hand- oder Multifunktionswagen, insbesondere Kinderwagen, mit einem Rahmen (1), der mehrere über Gelenke, (5, 8) miteinander verbundene Rahmenteilen (2, 3, 4) aufweist, von denen ein erstes Rahmenteil (2) die Deichsel des Wagens mit dem Handgriff (2'') bildet, sowie mit mehreren eine vordere und eine rückwärtige Achse bildenden Rädern (9, 10), **dadurch gekennzeichnet**, daß ein zweites Rahmenteil (4) sich zwischen der vorderen Achse und der rückwärtigen Achse des Wagens erstreckt, und daß die Rahmenteile (2, 3, 4) bei aufgeklapptem Wagen, d.h. in der Gebrauchsstellung des Wagens über die Gelenke (5, 8) Z-förmig aneinander anschließen.

2. Zusammenklappbarer Hand- oder Multifunktionswagen, insbesondere Kinderwagen, mit einem Rahmen (1), der mehrere über Gelenke, (5, 8) miteinander verbundene Rahmenteilen (2, 3, 4) aufweist, von denen ein erstes Rahmenteil (2) die Deichsel des Wagens mit dem Handgriff (2'') bildet, sowie mit mehreren eine vordere und eine rückwärtige Achse bildenden Rädern (9, 10), **dadurch gekennzeichnet**, daß die Gelenke (5, 8) zwischen den Rahmenteilen (2, 3, 4) vorgegebene Raststellungen aufweisen, in denen die Gelenke (5, 8) verriegelbar sind oder verrasten, und daß eine gemeinsame, vorzugsweise an dem Handgriff des Wagens vorgesehene Entriegelung (6, 7) für sämtliche Gelenke (5, 8) vorgesehen ist.

3. Zusammenklappbarer Hand- oder Multifunktionswagen, insbesondere Kinderwagen, mit einem Rahmen (1), der mehrere über Gelenke, (5, 8) miteinander verbundene Rahmenteilen (2, 3, 4) aufweist, von denen ein erstes Rahmenteil (2) die Deichsel des Wagens mit dem Handgriff (2'') bildet, mit einem im Rahmen (1) angeordneten Funktionselement, beispielsweise Sitz (15), Kinderwagentasche, Fahrradsitz, Babywippe, eines Hochstuhl, sowie mit mehreren eine vordere und eine rückwärtige Achse bildenden Rädern (9, 10), **dadurch gekennzeichnet**, daß das Funktionselement über einen Schnellverschluß (16, 17) austauschbar vorgesehen ist.

4. Wagen nach einem der vorhergehenden Ansprüche, dadurch gekennzeichnet, daß die Gelenke (5, 8) zwischen den Rahmenteilen (2, 3, 4) vorgegebene Raststellungen aufweisen, in denen die Gelenke (5, 8) verriegelbar sind oder verrasten.

5. Wagen nach einem der vorhergehenden Ansprüche, gekennzeichnet durch eine gemeinsame, vorzugsweise an dem Handgriff des Wagens vorgesehene Entriegelung (6, 7) für sämtliche Gelenke (5, 8).

6. Wagen nach einem der vorhergehenden Ansprüche, gekennzeichnet durch ein im Rahmen (1) angeordnetes Funktionselement, beispielsweise Sitz (15), Kinderwagentasche, Fahrradsitz, Babywippe, eines Hochstuhl, wobei beispielsweise das Funktionselement austauschbar vorgesehen ist.

7. Wagen nach einem der vorhergehenden Ansprüche, dadurch gekennzeichnet,
daß ein zweites Rahmenteil (4) sich zwischen der vorderen Achse und der rückwärtigen Achse des Wagens erstreckt und die Rahmenteile (2, 3, 4) bei aufgeklapptem Wagen, d.h. in der Gebrauchsstellung des Wagens über die Gelenke (5, 8) Z-förmig aneinander anschließen,
und/oder
daß im Gebrauchszustand das erste Rahmenteil (2) über wenigstens ein erstes Gelenk (5) an eine Seite des dritten Rahmenteils (3) und dieses an einer dem ersten Gelenk (5) entfernt liegenden Seite über wenigstens ein zweites Gelenk (8) an das zweite Rahmenteil (4) anschließt,
und/oder
daß im Gebrauchszustand das erste Rahmenteil (2) und das dritte Rahmenteil (3) einen ersten Winkel (α) miteinander einschließen, der sich zur Rückseite des Rahmens (1) hin öffnet und der vorzugsweise ein Winkel größer als 90° ist,
und/oder
daß das zweite Rahmenteil (4) und das dritte Rahmenteil (3) einen zweiten Winkel (β) miteinander einschließen, der sich zur Vorderseite des Rahmens (1) hin öffnet und vorzugsweise kleiner als 90° ist,
und/oder
daß im Nichtgebrauchszustand die Rahmenteile (2, 3, 4) einander unmittelbar benachbart oder im wesentlichen unmittelbar benachbart vorgesehen sind.

8. Wagen nach einem der vorhergehenden Ansprüche, dadurch gekennzeichnet, daß eine Achse, beispielsweise die vordere Achse nur ein Rad (10) und die andere Achse, beispielsweise die rückwärtige Achse zwei Räder (9) aufweist.

9. Wagen nach einem der vorhergehenden Ansprüche, dadurch gekennzeichnet,
daß die Gelenke (5, 8) in der Gebrauchsstellung und/oder in der Nichtgebrauchsstellung verrasten,
und/oder
daß das wenigstens eine erste zwischen dem ersten Rahmenteilt (2) und dem dritten Rahmenteil (3) vorgesehen Gelenk eine Vielzahl von Raststellungen aufweist.

10. Wagen nach einem der vorhergehenden Ansprüche, gekennzeichnet durch ein Schnellkupplungssystem (16, 17) zum lösbaren Verbinden des Funktionselementes (15) am Rahmen (1).
